# EUROPÄISCHE PATENTANMELDUNG

(11) **EP 1 010 519 A1**
(43) Veröffentlichungstag der Anmeldung: **21.06.2000**
(21) Anmeldenummer: 98811232.2
(22) Anmeldetag: 16.12.1998
(51) Int. Cl.: B32B 15/08, B32B 27/08, B32B 27/36, B32B 27/34, B32B 27/32, B65D 65/40

(54) **Sterilisierbare Verbundfolie**

(71) Anmelder: Alusuisse Technology & Management AG, 8212 Neuhausen am Rheinfall (CH)
(72) Erfinder: Jud, Wilfried, 78224 Singen (DE); Janacek, Rudolf, 8280 Kreuzlingen (CH); Pietzsch, Joachim, 78244 Gottmadingen (DE)

(57) **Zusammenfassung**

Sterilisierbare Verbundfolie zur Erzeugung von Beutelverpackungen und dergl., für beispielsweise flüssige, pastöse oder feste Nahrungsmittel. Die sterilisierbare Verbundfolien nach vorliegender Erfindung enthalten eine wasserdampf- und gasundurchlässige Sperrschicht aus einer Metallfolie und auf beiden Seiten der Sperrschicht wenigstens je eine funktionelle Schicht. Folgende Schichten sind, übereinander angeordnet, in der Verbundfolie enthalten:
a) eine erste funktionelle Schicht enthaltend eine Kunststoff-Folie aus der Reihe der Polyester oder der Polyolefine oder eine Extrusionsschicht aus Polyolefinen oder eine oder mehrere Lackschichten oder Druck- und Lackschichten oder Druckschichten und
b) eine Metallfolie und
c) eine zweite funktionelle Schicht in Form einer Kunststoff-Folie aus der Reihe der coextrudierten Polyamid/Polypropylen-Folien.

## Beschreibung

Vorliegende Erfindung betrifft eine sterilisierbare Verbundfolie, enthaltend eine wasserdampf- und gasundurchlässige Sperrschicht aus einer Metallfolie und beidseitig der Sperrschicht wenigstens je eine funktionelle Schicht, und die Verwendung der Verbundfolien.

Es sind sterilisierbare Verbundfolien, beispielsweise zur Erzeugung von Beuteln zur Verpackung von Nahrungsmitteln für Mensch und Tier bekannt. Beispielsweise werden Verbunde aus Kunststoffolien oder Kunststofflaminaten und einer wasserdampf- und gasundurchlässigen Sperrschicht in Form einer Metallfolie durch Stanzen oder Schneiden und/oder Falzen und Siegeln zu Beuteln verarbeitet. Beispielhaft für eine solche Verbundfolie steht ein vierschichtiger Verbund enthaltend nacheinander eine z.B. eine Polyester-Folie, eine Aluminiumfolie, eine orientierte Polyamidfolie und eine Polypropylenfolie. Die PETP-Folie ergibt die Festigkeit, die Polyamidfolie wirkt stützend im Verbund und die in der Regel relativ dick gewählte Polypropylenfolie verbessert die Durchstossfestigkeit und ist zudem siegelbar. Jede der vier Schichten ist mit den benachbarten Schichten durch einen Klebstoff und fallweise einen zusätzlichen Haftvermittler und/oder Primer verbunden.

Es ist erkennbar, dass die Erzeugung eines derartigen Verbundes aufwendig ist. Die Vielzahl von Schichten bedürfen einer entsprechenden Zahl von Maschinendurchgängen und durch die Vielzahl von Schichten sich ergebende Zahl von Klebstoffschichten können, gerade bei Sterilisationsbedingungen, leicht Delaminationen auftreten.

Aufgabe vorliegender Erfindung ist es, eine Verbundfolie vorzuschlagen, die einen einfachen Aufbau aufweist, die den Sterilisationsbedingungen widersteht und leicht zu Beuteln verarbeitet werden kann.

Erfindungsgemäss wird dies dadurch erreicht, dass die Verbundfolie einen Schichtaufbau aufweist, enthaltend übereinander angeordnet:
a) eine erste funktionelle Schicht enthaltend eine Kunststoff-Folie aus der Reihe der Polyester oder der Polyolefine oder eine Extrusionsschicht aus Polyolefinen oder eine oder mehrere Lackschichten oder Druck- und Lackschichten oder Druckschichten und
b) eine Metallfolie und
c) eine zweite funktionelle Schicht in Form einer Kunststoff-Folie aus der Reihe coextrudierter Polyamid/Polypropylen-Folien.

Bevorzugt werden sterilisierbare Verbundfolien, welche einen Schichtaufbau aufweisen, enthaltend nacheinander:
a) eine Kunststoff-Folie aus der Reihe der Polyester-Folien und
b) eine Metallfolie und
c) eine Kunststoff-Folie aus der Reihe der coextrudierten Polyamid/Polypropylen-Folien.

Weitere bevorzugte sterilisierbare Verbundfolien nach vorliegender Erfindung sind solche, enthaltend nacheinander:
a) eine oder mehrere Lackschichten oder Druck- und Lackschichten oder Druckschichten und
b) eine Metallfolie und
c) eine Kunststoff-Folie aus der Reihe der coextrudierten Polyamid/Polypropylen-Folien.

Die Metallfolien können beispielsweise eine Dicke von 5 bis 100 µm, zweckmässsig von 7 bis 25 µm und vorzugsweise von 7 bis 15 µm aufweisen.

Die Metallfolie kann aus Stahl, Eisen oder Kupfer sein und ist bevorzugt eine Aluminiumfolie. Die Aluminiumfolie kann aus reinem Aluminium oder zweckmässig aus einer Aluminiumlegierung der Reihen AlMn, AlFeMn, wie AlFe1,5Mn, AlFeSi oder AlFeSiMn, beispielsweise in einer Reinheit von 97,5 und höher, vorzugsweise in einer Reinheit von 98,5 und höher, sein. Die Metallfolie ist vorzugsweise eine ununterbrochene Folie, sowie texturfrei und homogen.

Die Metallfolie, resp. die Aluminiumfolie, ist entweder nicht mit einem Primer vorbehandelt oder ist beispielsweise ein- oder beidseitig mit einem Primer vorbehandelt.

Geeignete Primer können z.B. aus den Reihen der Epoxidharze oder der Polyurethane ausgewählt werden.

Bei den Kunststoff-Folien aus der Reihe der Polyester kann es sich um eine Monofolie oder um einen Folienverbund aus zwei oder mehreren Schichten handeln. Die Kunststoff-Folien aus der Reihe der Polyester können ungereckt oder axial oder biaxial gereckt sein. Die Kunststoff-Folien aus der Reihe der Polyester können beispielsweise eine Dicke von 8 bis 25 µm, zweckmässig 10 bis 18 µm und vorzugsweise von 12 µm aufweisen.

Beispiele für Kunststoff-Folien aus der Reihe der Polyester (PET-Folien) Polyalkylenterephthalate oder Polyalkylenisophthalate mit Alkylengruppen oder -resten mit 2 bis 10 Kohlenstoffatomen oder Alkylengruppen mit 2 bis 10 C-Atomen, die wenigstens durch ein - 0- unterbrochen sind, wie z.B. Polyethylenterephthalat, Polypropylenterephthalat, Polybutylenterephthalat (Polytetramethylenterephthalat), Polydecamethylenterephthalat, Poly-1,4-cyclohexyldimethylolterephthalat oder Polyethylen-2,6-naphthalen-dicarboxylat oder Polyalkylenterephthalat- und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe. Andere zweckmässige Polyester sind in der Fachwelt unter dem Kürzel PEN bekannt.

Andere Polyester sind Copolymere der Terephthalsäure und einer weiteren Polycarboxylsäure mit wenigstens einem Glykol. Zweckmässig sind dabei die Copolyester der Terephthalsäure, Ethylenglykol und einem zusätzlichen Glykol. Bevorzugt sind glykolmodifizierte Polyester, die der Fachwelt als PETG bekannt sind.

Weitere zweckmässige Polyester sind Polylalkylenterephthalate mit Alkylengruppen oder -resten mit 2 bis 10 Kohlenstoffatomen und Polylalkylenterephthalate mit Alkylengruppen oder -resten mit 2 bis 10 Kohlenstoffatomen, die durch ein oder zwei -0- unterbrochen sind. Weitere bevorzugte Polyester sind Polylalkylenterephthalate mit Alkylengruppen oder -resten mit 2 bis 4 Kohenstoffatomen. Zu diesen Polyethylenterephthalaten sind auch A-PET, PETP und das genannte PETG oder G-PET zu zählen. Ganz besonders bevorzugt sind Polyethylenterephthalat-Folien des Typs PETP. Die Folien aus Polyester können unverstreckt oder mono- oder vorzugsweise biaxial orientiert sein.

Bei den Kunststoff-Folien aus der Reihe der Polyolefine es sich um eine Monofolie oder um einen Folienverbund aus zwei oder mehreren Schichten handeln. Die Kunststoff-Folien aus der Reihe der Polyolefine können unverstreckt oder axial oder biaxial gereckt sein. Die Kunststoff-Folien aus der Reihe der Polyolefine können beispielsweise eine Dicke von 8 bis 30 µm, zweckmässig 10 bis 23 µm und vorzugsweise von 12 bis 18 µm aufweisen.

Bei den Extrusionsschichten aus Polyolefinen kann es sich um ein Extrusionsschicht oder eine Coextrusionsschicht handeln. Das Flächengewicht der Extrusionsschicht oder Coextrusionsschicht kann beispielsweise von 8 bis 25 g/m² und vorzugsweise von 10 bis 20 g/m² betragen.

Beispiele von Polyolefinen für die Folien oder Extrusionsbeschichtungen sind Polyethylene, wie Polyethylene niedriger, mittlerer oder hoher Dichte oder lineare Polyethylene niedriger, mittlerer oder hoher Dichte, wobei Polyethylene hoher Dichte besonders bevorzugt sind. Weitere Beispiele sind Copolymere oder Terpolymere des Ethylens mit Acrylsäure (EAA, Ethyl Acrylic Acid), des Ethylens mit Acrylestern, wie Methylacrylat (EMA), Ethylacrylat (EEA) oder Butylacrylat (EnBA), des Ethylens mit Vinylacetaten (EVA), des Ethylens mit Methylacrylsäure (EMAA) oder des Ethylens mit Ethylacrylat und Acrylsäure (EAEAA) oder Ionomerharze. Als weiteres Beispiel für ein Polyolefin sind die Polypropylene zu nennen. Das Polypropylen für Folien oder Extrusionsbeschichtungen kann ein isotaktisches, syndiotaktisches oder ataktisches Polypropylen oder ein Gemisch davon sein. Das Polypropylen kann amorph, teilkristallin, kristallin oder hochkristallin sein. Es können auch Block-Copolymere oder Random-Copolymere des Polypropylens angewendet werden. Die mittlere Molmasse kann z.B. von unter 10'000 bis zu 600'000 und höher betragen. Es können auch Copolymere, wie Ethylen/Propylen-Block- oder Multiblock-Copolymere und Polyblends, wie kautschukmodifiziertes Polypropylen, des Polypropylens eingesetzt werden. Beispielsweise können Ethylen/Propylen-Block-Copolymere bis zu 50 Gew.-% Polyethylene, wie z.B. Polyethylen hoher Dichte (HDPE), enthalten.

Die Schichten und Folien aus Polyolefinen können unverstreckt sein oder können mono- oder vorzugsweise biaxial orientiert sein.

Die Kunststoff-Folie aus coextrudiertem Polyamid/Polypropylen stellt vorzugsweise eine vorfabrizierte Einheit aus den zwei Polymeren dar. Die Kunststoff-Folie aus coextrudiertem Polyamid/Polypropylen kann beispielsweise eine Dicke von 50 bis 120 µm, zweckmässig 60 bis 90 µm und vorzugsweise von 70 bis 80 µm aufweisen. Die Dicke der Polyamidschicht in der coextrudierten Polyamid/Polypropylen-Folie kann beispielsweise 5 bis 50 %, zweckmässig 10 bis 30 % und insbesondere 15 bis 25 % der Gesamtdicke der coextrudierten Folie betragen.

Die Folien aus dem coextrudierten Polyamid/Polypropylen können unverstreckt sein oder können mono- oder vorzugsweise biaxial orientiert sein.

Die coextrudierten Polyamid/Polypropylen-Folien können eine Polyamidschicht aufweisen aus beispielsweise Polyamid 6, ein Homopolymerisat aus ε-Caprolactam (Polycaprolactam); Polyamid 11, Polyamid 12, ein Homopolymerisat aus ω-Laurinlactam (Polylaurinlactam); Polyamid 6,6, ein Homopolykondensat aus Hexamethylendiamin und Adipinsäure (Polyhexamethylenadipamid); Polyamid 6,10, ein Homopolykondensat aus Hexamethylendiamin und Sebacinsäure (Polyhexamethylensebacamid); Polyamid 6,12, ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamethylenterephthalamid), sowie Gemische davon. Die coextrudierte Schicht aus Polyamiden ist vorteilhaft unverstreckt. Die Folien aus Polyamiden sind unverstreckt oder mono- oder biaxial orientiert.

Beispiele von Polypropylenen in der Kunststoff-Folie aus coextrudiertem Polyamid/Polypropylen können der oben angeführten Aufzählung entnommen werden.

Die Polypropylenschicht der Kunststoff-Folie aus coextrudiertem Polyamid/Polypropylen ist in der Regel gegen die Innenseite resp. den Inhalt, bezogen auf einen Verpackungsbehälter aus der erfindungsgemässen Verbundfolie, gerichtet. Sinngemäss ist die Polyamidschicht gegen die Metallfolie kaschiert.

Vorliegende Verbundfolien können über die aussenliegende Polypropylenschicht der coextrudierten Folie gesiegelt werden. Fallweise, um die Siegeleigenschaften weiter zu steuern, kann auf dem Polypropylen, wie auch auf der anderen freien Seite der Verbundfolie, z.B. der Lackschicht oder der Polyester- oder Polyolefinfolie oder der Polyolefinschicht, Siegelschichten, wie Siegelfolien, Heisssiegellacke oder Siegellacke, z. B. auf Basis von Polyolefinen, wie Polyethylenen, Co- und Terpolymere des Ethylens, vorzugsweise EAA, Polypropylenen oder Mischungen davon, ferner Polyacrylaten, PVC-Harzen, Polyvinylidenchloriden, EVA Polyethylenterephthalate, insbesondere des Types A-PET, usw. aufgebracht sein. Die freie Seite, insbesondere der Polyesterfolien, können mit EVA (Ethylen/Vinylalkohol-Copolymer) oder einer amorphen Polyester-Siegelschicht des Types PET-A beschichtet sein.

Die einzelnen Schichten, d.h. die erste funktionelle Schicht und dabei insbesondere die Kunststoff-Folie a) aus der Reihe der Polyester-Folien oder der Polyolefin-Folien oder Polyolefin-Schichten, gegen die Metallfolie und/oder die zweite funktionelle Schicht gegen die Metallfolie und allfällige auf die freien Seiten der Verbundfolie zu liegen kommende Siegelfolien, können mittels eines Haftvermittlers und/oder Kaschierklebers miteinander verbunden werden.

Geeignete Kaschierkleber können lösungsmittelhaltig oder lösungsmittelfrei und auch wasserhaltig sein. Beispiele von Kaschierklebern sind lösungsmittelhaltige, lösungsmittelfreie oder wässrige Acrylatkleber oder Polyurethan-Kleber-Systeme. Aber auch Klebstoffe welche unter Einwirkung von energiereicher Strahlung (z.B. UV; Elektronen-Strahlen) aushärten, können eingesetzt werden. Im Hinblick auf die bevorzugte Verwendung des Verbundmaterials im Bereich der Nahrungsmittel sind physiologisch unbedenkliche Klebstoffsysteme zu bevorzugen. Besonders geeignete Klebstoffsysteme sind aliphatische Systeme.

Als Haftvermittler können beispielsweise Produkte auf Basis von Di-isocyanat oder aliphatischen polyestern eingesetzt werden.

Der Kaschierkleber, wie auch der Haftvermittler, kann beispielsweise in Mengen von 0,5 bis 10 g/m² vorzugsweise in Mengen von 2 bis 8 g/m² und insbesondere in Mengen von 3 bis 6 g/m² angewendet werden. Die Kaschierkleber können auch in solchen Mengen angewendet werden, dass sie Schichten von wenigstens 0,1 µm Dicke und maximal 12 µm Dicke ausbilden.

Die Oberfläche der Metallfolie kann durch entsprechende Vorbehandlung (z.B. bürsten, chromatieren, Ionisierungs-, Ozon-, Korona-, Flamm - oder Plasmabehandlung) eine verbesserte Haftung für den Kleber oder Lack oder für eine Extrusionsschicht aufweisen. Zur Unterstützung und Verbesserung der Verbundhaftung der Lacke, Haftvermittler oder Kaschier-Weber zwischen den Kunststoffolien oder von extrudierten Schichten, ist es oft zweckmässig den Folien auf den kleberzugewandten Seiten oder den Extrudaten eine ausreichende Oberflächenspannung zu vermitteln. Die Erhöhung der Oberflächenspannung kann vorzugsweise durch eine Ionisierungs-, Ozon-, Plasma-, Flamm- oder eine Koronavorbehandlung erfolgen.

Es kann auch vorteilhaft sein, die erste und/oder die zweite funktionelle Schicht, jeweils mit der Metallfolie, ohne Kaschierkleber und/oder Haftvermittler, nur unter Druck und Wärmeeinwirkung, mit der Metallfolie zu verbinden.

In einer möglichen Ausführungsform kann beispielsweise die Kunststoff-Folie a) aus der Reihe der Polyester-Folien auf der Metallfolien zugewandten Seite einen Konterdruck aufweisen. Ein Konterdruck ist besonders für durchsichtige und durchscheinende Folien geeignet. Es ist auch möglich die Polyester-Folie auf deren Aussenseite mit einem Druckmuster zu versehen und fallweise das Druckmuster mit einem Lack abzudecken.

Auf der Aussenseite oder gegen die Aussenseite gerichtet, jeweils auf einen Verpackungsbehälter aus der erfindungsgemässen Verbundfolie bezogen, können die Verbundfolien als erste funktionelle Schicht a) eine oder mehrere Lackschichten oder Lack- und Druckschichten enthalten. Mit Druckschichten sind insbesondere durch ein Druckverfahren erzeugten Materialauftrag, der teil- oder ganzflächig erfolgen kann, umfasst.

Als Schutzlacke bzw. Druckvorlacke, Druckfarben und wenn benötigt Drucküberlacke, kommen beispielsweise in Frage;

Systeme auf Lösemittelbasis (1) oder Systeme mit Wasser als Lösemittel (2) oder Systeme die durch UV-, oder andere energiereiche Strahlung getrocknet bzw. gehärtet werden (3). Als lösemittelgelöste Druckvor- und Drucküberlacke (1) können Lacke mit der Bindemittelbasis Polyacrylat, Polymethacrylat, Polyester, Epoxid, Zellulosenitrat, Polyvinylchloridaceat, Polyvinylbutyral oder Mischungen aus diesen Bindemitteln, gehärtet mit Melaminharzen, Hamstoffharzen, Polyisocyanaten oder Polyaziridinen oder Mischungen aus diesen, gegebenenfalls unter Mitverwendung von Säuren, Aminen, Kalzium-, Zinnverbindungen als Härtungsbeschleuniger und Silanen, Titan- oder Zirkonchelaten als haftungsfördernde Zusätze, eingesetzt werden.

Die entsprechenden Druckfarben können analog aufgebaut sein oder sind häufig aus nichthärtenden Harzen, z.B. Polyvinylbutyral oder Zellulosenitrat, formuliert.

Wässrige Systeme (2) enthalten z.B. zusätzlich noch Tenside um die Löslichkeit zu gewährleisten. Als UV- und strahlenhärtende Druckfarben und Drucküberlacke (3) können radikalisch vernetzende Farben und Überlacke auf Basis von Acrylaten auf konventionellen, wie oben beschriebenen Druckvorlacken, sowie nach kationischem Mechanismus vernetzende Druckfarben auf, wie oben beschriebenen, Druckvorlacken oder UV- oder strahlenhärtende, nach kationischem Mechanismus vernetzenden, Druckvorlacken verwendet werden.

Die Lackschicht oder -schichten können durch Giessen, Sprühen, Rakeln, Glatt-Walzenauftrag usw., beispielsweise in einer Menge von jeweils 0,5 bis 10 g/m² und insbesondere von 1,0 bis 5 g/m², aufgebracht werden.

Werden ausser der oder den Lackschichten oder Extrusionsbeschichtungen noch Druckschichten oder Druckschichten allein angewendet, so kann das Bedrucken der Verbundfolie mit allen bekannten Druckverfahren vorgenommen werden, so z.B. Buch-, Offset-, Flexo-, Sieb-, Helio- und Kupfertiefdruck. Die Wahl, welches Druckverfahren zur Anwendung kommt hängt von der gewünschten Druckqualität, von den jeweiligen technischen Gegebenheiten und der Auflagenhöhe ab. Es ist möglich ein- oder mehrfarbige Druckschichten teil- oder vollflächig aufzubringen. Bevorzugt ist der Flexodruck (auch Anilin- oder Gummidruck genannt) und der Tiefdruck, wie Kupfertiefdruck, oder der Heliodruck. Die Bedruckung liegt auf der nach aussen weisenden Seite des Verbundmaterials und kann beispielsweise zusätzlich mittels wenigstens einer weiteren Lackschicht überlackiert sein. Beispielsweise können eine, zwei, drei oder mehrere Lackschichten übereinander angewendet werden, wobei die erste Lackschicht auf die Metallfolie oder die vorbehandelte Metallfolie zu liegen kommt. In anderer Ausführungsform kann die Bedruckung direkt auf die Metallfolie oder die vorbehandelte Metallfolie zu liegen kommen und die Bedruckung kann gegebenenfalls durch eine, zwei oder mehrere Lackschichten überdeckt werden. Letztere Lackschichten sind vorteilhart transparent oder durchscheinend und stellen auch Schutzschichten für die Bedruckung dar. Die Bedruckung kann auch in mehreren Schichten erfolgen und wenigstens eine Druckschicht kann vollflächig sein, so dass diese vollflächige Druckschicht oder Druckschichten wie eine Lackschicht wirkt. In weiterer Ausführung kann die Metallfolie oder vorbehandelte Metallfolie mit einer oder mehreren Lackschichten überlackiert werden. Auf diese Lackschicht oder -schichten kommt eine ganz- oder teilflächige, ein- oder mehrfarbige Bedruckung zu liegen und diese Bedruckung kann fallweise mit einer oder mehreren, insbesondere transparenten oder durchscheinenden Lackschichten überdeckt werden.

Es kann gegebenenfalls auch die Innenseite des vorliegenden Verbundes mit einem Lack und/oder einem Druck versehen werden.

Die Erzeugung der erfindungsgemässen Verbundfolie kann auf einfache Weise und wenige Verfahrensschritte erfolgen. Die zweite funktionelle Schicht c) wird durch Coextrusion erzeugt und zur Verarbeitung bereitgestellt. Über die Polyamidschicht wird die zweite funktionelle Schicht c) auf die Metallfolie aufkaschiert. Auf der noch freien Seite der Metallfolie wird die erste funktionelle Schicht a) in Form einer Polyester-Folie aufkaschiert oder die Extrusionsbeschichtung oder in einem ein oder mehrstufigen Lackierverfahren und/oder Druckverfahren die Lackschicht oder -schichten, die Druckschicht oder -schichten oder Lack- und Druckschichten oder die die Extrusionsbeschichtung und Druckschichten aufgebracht. Die Reihenfolge der Kaschierverfahren, resp. des Lackierens und Bedruckens, können sinngemäss auch in geänderter Reihenfolge ausgeführt werden. Bevorzugt wird im allgemeinen die Reihenfolge der Kaschierung ersten funktionellen Schicht a) auf die Metallfolie oder das Anbringen der Lackierung auf der Metallfolie und anschliessend die Kaschierung der zweiten funktionellen Schicht c) auf der noch freien Seite der Metallfolie.

Vorliegende Erfindung betrifft auch Beutelverpackungen aus einer sterilisierbaren Verbundfolie nach vorliegender Erfindung. Beutelverpackungen können beispielsweise aus aus einem Abschnitt des Verbundmaterials durch Falten und Siegeln oder aus zwei Seitenteilen aus dem vorliegenden Verbundmaterial durch -- gegebenenfalls Falten und -- Siegeln oder aus mehreren Seitenteilen aus dem Verbundmaterial durch -- gegebenenfalls Falten und --Siegeln, geformt werden. Typische Beutel sind Flachbeutel, Standbeutel, Siegelrandbeutel, Raumbeutel, standfähige Raumbeutel, Seitenrand-Flachbeutel, Klotzbodenbeutel, oder auch Säcke, wie geschweisste Flach- oder Faltensäcke, usw. Die Beutelverpackungen ihrerseits können für Füllgüter, wie stückige, breiige, pastöse, halbflüssige oder flüssige Nahrungsmittel für Mensch und Tier oder für Genussmittel verwendet werden. Weitere beispielhafte Anwendungen derartiger Beutel sind Kosmetika oder Körperpflegemittel in pastöser bis flüssiger Form. Andere Beispiele sind pharmazeutische Produkte oder Heilmittel. Die Verbundfolien nach vorliegender Erfindung sind ohne Delamination der einzelnen Schichten oder Festigkeitsverlust, sterilisierbar, beispielsweise durch eine Hitzebehandlung bei 110 bis 130°C, vorzugsweise 121°C, während 10 bis 60 Minuten, vorzugsweise 30 Minuten.

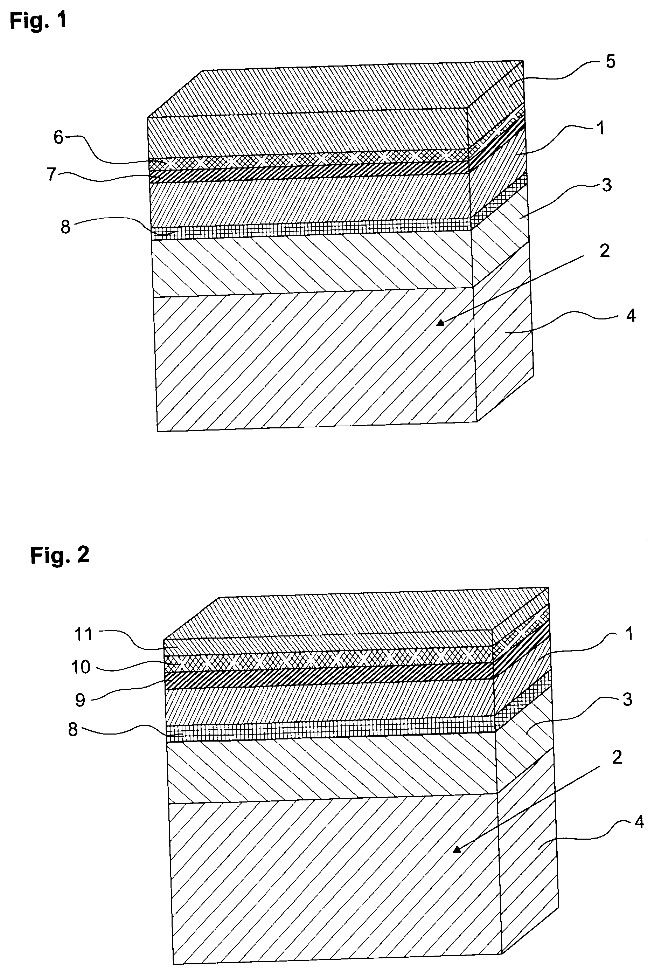

Die Figuren 1 und 2 zeigen schematisch und beispielhaft den Aufbau der erfindungsgemässen Verbundfolien.

Die Verbundfolie gemäss Fig. 1 weist eine Metallfolie 1 auf. Auf einer Seite der Metallfolie 1 ist die erste funktionelle Schicht in Form einer PETP-Folie 5 mittels des Kaschierklebers 7 aufkaschiert. Beispielhaft trägt die PETP-Folie 5 einen Konterdruck 6. Auf der anderen Seite ist die Metallfolie 1 die zweite funktionelle Schicht 2 in Form einer Coextrusionsfolie aus Polyamid 3 und Polypropylen 4 über einen Kaschierkleber 8 aufkaschiert. Bei der Anwendung der Verbundfolie ist das Polypropylen 4 des coextrudierten Filmes 2 gegen den Inhalt in der aus der Verbundfolie hergestellten Verpackung gerichtet.

Die Verbundfolie gemäss Fig. 2 weist eine Metallfolie 1 auf. Auf einer Seite der Metallfolie 1 ist die erste funktionelle Schicht in Form von Druck- und Lackschichten angeordnet. Auf der Metallfolie ist ein Vorlack 9, darauf der Oberflächendruck 10 und schliesslich darauf der Schutzlack 11 aufgebracht. Auf der anderen Seite der Metallfolie 1 ist die zweite funktionelle Schicht 2 in Form einer Coextrusionsfolie aus Polyamid 3 und Polypropylen 4 über einen Kaschierkleber 8 aufkaschiert. Auch bei dieser Anwendung der Verbundfolie ist das Polypropylen 4 des Coextrudates 2 gegen den Inhalt in der aus der Verbundfolie hergestellten Verpackung gerichtet.

## Patentansprüche

1. Sterilisierbare Verbundfolien, enthaltend eine wasserdampf- und gasundurchlässige Sperrschicht aus einer Metallfolie und auf beiden Seiten der Sperrschicht wenigstens je eine funktionelle Schicht,
dadurch gekennzeichnet, dass
die Verbundfolie einen Schichtaufbau aufweist, enthaltend übereinander angeordnet:
a) eine erste funktionelle Schicht enthaltend eine Kunststoff-Folie aus der Reihe der Polyester oder der Polyolefine oder eine Extrusionsschicht aus Polyolefinen oder eine oder mehrere Lackschichten oder Druck- und Lackschichten oder Druckschichten und
b) eine Metallfolie und
c) eine zweite funktionelle Schicht in Form einer Kunststoff-Folie aus der Reihe der coextrudierten Polyamid/Polypropylen-Folien.

2. Sterilisierbare Verbundfolien nach Anspruch 1, dadurch gekennzeichnet dass die Verbundfolie einen Schichtaufbau aufweist, enthaltend nacheinander:
a) eine Kunststoff-Folie aus der Reihe der Polyester-Folien und
b) eine Metallfolie und
c) eine Kunststoff-Folie aus der Reihe der coextrudierten Polyamid/Polypropylenfolien.

3. Sterilisierbare Verbundfolien nach Anspruch 1, dadurch gekennzeichnet dass die Polyesterfolie der Schicht a) mono- oder biaxial verstreckt ist.

4. Sterilisierbare Verbundfolien nach Anspruchen 1, dadurch gekennzeichnet dass die Polyesterfolie der Schicht a) vom Typ PETP ist.

5. Sterilisierbare Verbundfolien nach Anspruch 1, dadurch gekennzeichnet dass die Verbundfolie ein Schichtaufbau aufweist, enthaltend nacheinander:
a) eine oder mehrere Lackschichten oder Druck- und Lackschichten oder Druckschichten und
b) eine Metallfolie und
c) eine zweite Kunststoff-Folie aus der Reihe der coextrudierten Polyamid/Polypropylenfolien.

6. Sterilisierbare Verbundfolien nach Anspruch 1, dadurch gekennzeichnet, dass die Polyester-Folien der Schicht a) eine Dicke von 8 bis 25 µm, vorzugsweise von 10 bis 18 µm und insbesondere von 12 µm aufweisen, dass die Metallfolie eine Dicke von 5 bis 100 µm, vorzugsweise von 7 bis 25 µm und insbesondere von 7 bis 15 µm aufweist und dass die coextrudierte Polyamid/Polypropylenfolie eine Dicke von 50 bis 120 µm, vorzugsweise von 60 bis 90 µm und insbesondere von 70 bis 80 µm, aufweisen.

7. Sterilisierbare Verbundfolien nach Anspruch 1, dadurch gekennzeichnet, dass die Metallfolie eine Aluminiumfolie, zweckmässig reinem Aluminium oder aus einer Aluminiumlegierung der Reihen AlMn, AlFeMn, AlFeSi oder AlFeSiMn, vorzugsweise in einer Reinheit von 97,5 und höher und insbesondere in einer Reinheit von 98,5 und höher, ist.

8. Sterilisierbare Verbundfolien nach Anspruch 1, dadurch gekennzeichnet, dass die Metallfolie ein- oder beidseitig mit einem Primer vorbehandelt ist.

9. Sterilisierbare Verbundfolie nach Anspruch 1, dadurch gekennzeichnet dass zwischen den einzelnen Schichten ein Haftvermittler und/oder ein Kaschierkleber angeordnet ist.

10. Beutelverpackungen aus einer sterilisierbaren Verbundfolie nach Anpruch 1.
